# EUROPÄISCHE PATENTSCHRIFT

(11) **EP 2 405 147 B1**
(45) Veröffentlichungstag und Bekanntmachung des Hinweises auf die Patenterteilung: **06.01.2016**
(21) Anmeldenummer: 11005459.0
(22) Anmeldetag: 04.07.2011
(51) Int. Cl.: F16B 5/06, B60R 13/02

(54) **Befestigungsbaugruppe**
Fixing component
Elément de fixation

(30) Priorität: 09.07.2010 FR 1055611
(43) Veröffentlichungstag der Anmeldung: 11.01.2012
(73) Patentinhaber: TRW Automotive Electronics & Components GmbH, 78315 Radolfzell (DE)
(72) Erfinder: Klein, Jean-Luc, 67350 Ringendorf (FR); Vogler, Laurent, 67330 Obermodern (FR); Kuhm, Michel, 67340 Ingwiller (FR)
(74) Vertreter: Prinz & Partner mbB

(56) Entgegenhaltungen:
- GB-A- 2 388 150
- JP-U- H01 165 811
- US-A- 4 312 614
- US-A1- 2010 158 632

## Beschreibung

Die Erfindung betrifft eine Befestigungsbaugruppe zur Befestigung eines Anbauteils, insbesondere eines Verkleidungsteils in einem Fahrzeuginnenraum, an einem Karosseriebauteil, mit einem Befestigungselement, das in einer Vormontageposition am Anbauteil befestigt werden kann und in einer Endmontageposition am Karosseriebauteil befestigt ist, und mit einem Verriegelungselement, das mit dem Befestigungselement zusammenwirken kann und in einer Verriegelungsposition das Befestigungselement in der Endmontageposition fixieren kann.

Befestigungsbaugruppen zur Befestigung von Verkleidungsteilen in einen Innenraum eines Fahrzeugs sind in verschiedenen Ausführungsformen aus dem Stand der Technik bekannt. Eine solche Befestigungsbaugruppe ist beispielsweise in der US 2010/158632 A1 gezeigt. An diese Befestigungsbaugruppen werden hohe Anforderungen gestellt: Zum einen sollen die Befestigungsbaugruppen mit geringem Aufwand zu montieren und im Reparaturfall auch leicht zu demontieren sein. Zum anderen muss die Befestigungsbaugruppe das Verkleidungsteil sicher an der Karosserie des Fahrzeugs befestigen, um ein Lösen, beispielsweise im Crashfall, zu verhindern. Dazu sind aus dem Stand der Technik zweiteilige Befestigungsbaugruppen mit einem Befestigungselement und einem Verriegelungselement bekannt. Das Befestigungselement wird in einem ersten Montageschritt am Anbauteil vormontiert. Anschließend wird das Befestigungselement mit dem Anbauteil in einem weiteren Montageschritt mit Rastelementen am Karosserieteil befestigt und das Verriegelungselement in das Befestigungselement eingeschoben. Das Verriegelungselement blockiert die Rastelemente des Befestigungselements und fixiert so das Befestigungselement in einer Endmontageposition am Karosserieteil. Zur Demontage des Verkleidungsteils kann das Verriegelungselement aus dem Befestigungselement entfernt werden, wodurch die Rastelemente freigegeben werden und das Befestigungsteil einfach vom Karosserieteil gelöst werden kann. Bei den bisher bekannten Befestigungsbaugruppen ist allerdings die Befestigung des Anbauteils am Befestigungsclip nicht zufriedenstellend gelöst.

Aufgabe der Erfindung ist es, eine Befestigungsgruppe mit einem Befestigungselement und einem Verriegelungselement bereitzustellen, die eine verbesserte Befestigung des Befestigungselements sowohl am Anbauteil als auch am Karosseriebauteil ermöglicht.

Zur Lösung der Aufgabe ist eine Befestigungsbaugruppe zur Befestigung eines Anbauteils, insbesondere eines Verkleidungsteils in einem Fahrzeuginnenraum, an einem Karosseriebauteil vorgesehen, mit einem Befestigungselement, das in einer Vormontageposition am Anbauteil befestigt werden kann und in einer Endmontageposition am Karosserieteil befestigt ist, und mit einem Verriegelungselement, das mit dem Befestigungselement zusammenwirken kann und in einer Verriegelungsposition das Befestigungselement in der Endmontageposition fixieren kann. Das Befestigungselement weist erste und zweite Rastelemente auf, wobei die ersten Rastelemente am Anbauteil und die zweiten Rastelemente am Karosseriebauteil verrasten können. Für die Anbringung des Befestigungsteils am Anbauteil und am Karosseriebauteil werden separate, voneinander unabhängige Rastelemente verwendet, so dass Anbauteil und Karosseriebauteil separat am Befestigungselement befestigt werden können. Eine gegenseitige Beeinflussung der Verbindung zwischen Anbauteil bzw. Karosseriebauteil und Befestigungselement ist so sicher ausgeschlossen, wodurch eine sehr zuverlässige Verbindung zwischen Befestigungselement und Anbauteil bzw. Karosseriebauteil möglich ist. Durch die zusätzlichen Rastelemente für das Anbauteil ist zudem eine bessere Positionierung des Anbauteil möglich, so dass das Anbauteil beispielsweise auch beabstandet vom Karosseriebauteil an diesem befestigt werden kann. Ferner können die jeweiligen Rastelemente individuell an die gewünschten Abzugskräfte bzw. Demontagekräfte angepasst werden. Es ist beispielsweise denkbar, dass die zweiten Rastelemente erst bei sehr hohen Abzugskräften lösbar sind, sodass das Anbauteil sicher an der Fahrzeugkarosserie gehalten ist, während die ersten Rastelemente einen relativ geringen Abzugswiderstand vom Anbauteil haben, sodass das Befestigungselement bei einer Reparatur einfach vom Anbauteil gelöst und ausgetauscht werden kann.

Um eine gegenseitige Beeinflussung der Rastelemente, beispielsweise bei der Montage des Befestigungselements, sicher auszuschließen, ist es auch denkbar, dass die ersten und zweiten Rastelemente des Befestigungselements an in Umfangsrichtung des Befestigungselement zueinander versetzt angeordneten Flächen des Befestigungselements vorgesehen sind. Bei der Bedienung der Rastelemente ist so eine Fehlbedienung der jeweils anderen Rastelemente sicher ausgeschlossen.

Vorzugsweise sind jeweils zwei in Einschubrichtung paarweise gegenüberliegende erste und zweite Rastelemente vorgesehen, wodurch eine besonders zuverlässige Befestigung möglich ist.

Die Rastelemente sind vorzugsweise in radialer Richtung nach außen federnd gelagert, so dass die Befestigungsbaugruppe zum einen jeweils in der Öffnung des Karosseriebauteil oder des Anbauteils zentriert wird und zum anderen sicher in der Öffnung gehalten wird.

Das Befestigungselement kann beispielsweise einen Körper aufweisen, der das Befestigungselement in Umfangrichtung vollständig umschließt. Das Befestigungselement liegt so über dem gesamten Umfang in der Öffnung des Anbauteils bzw. an der Öffnung des Karosseriebauteils an, so dass das Befestigungselement sicher gehalten ist. Zudem ist so eine Abdichtung der Öffnung im Karosseriebauteil möglich.

Um ein Verdrehen des Befestigungselements am Karosseriebauteil bzw. am Anbauteil zu verhindern, kann der Körper beispielsweise einen im Wesentlichen rechteckigen Querschnitt mit jeweils gegenüberliegen Flächen an den Längsseiten und Querseiten aufweisen.

In diesem Fall sind die ersten Rastelemente beispielsweise an den Flächen der Längsseiten oder der Querseiten und die zweiten Rastelemente an den Flächen der Querseiten oder der Längsseiten angeordnet. Die ersten Rastelemente und die zweiten Rastelemente sind also jeweils um 90° versetzt am Befestigungselement angeordnet, sodass eine Beeinflussung bei der Bedienung der jeweils anderen Rastelemente sicher ausgeschlossen ist.

Um ein genaues Positionieren des Befestigungselements zu ermöglichen bzw. um die Montage des Befestigungselements zu erleichtern, können beispielsweise am Befestigungselemente Zentrierelemente vorgesehen sein. Durch diese Zentrierelemente kann zudem zusätzlich eine Verdrehung des Befestigungselements am Anbauteil bzw. am Karosseriebauteil verhindert werden.

Die Zentrierelemente können beispielsweise Vorsprünge aufweisen, insbesondere in Einschubrichtung verlaufende Leisten. Die Leisten können bei der Montage in Aussparungen oder Nuten am Anbauteil oder am Karosseriebauteil eingreifen, wodurch zum einen eine Führung des Befestigungselements während der Montage erfolgt und zum anderen eine falsche Montage des Anbauteils ausgeschlossen werden kann.

Das Befestigungselement weist beispielsweise eine Dichtung auf, die in montiertem Zustand die Öffnung im Karosseriebauteil abdichten kann.

Weitere Vorteile und Merkmale ergeben sich aus der nachfolgenden Beschreibung in Verbindung mit den beigefügten Zeichnungen. In diesen zeigen:
- Figur 1 eine Explosionsansicht einer erfindungsgemäßen Befestigungsbaugruppe,
- Figur 2 eine Draufsicht des Befestigungselements der Befestigungsbaugruppe aus Figur 1,
- Figur 3 eine erste Seitenansicht des Befestigungselements,
- Figur 4 eine erste Schnittansicht des Befestigungselements entlang der Ebene IV-IV von Figur 2,
- Figur 5 eine zweite Seitenansicht des Befestigungselements,
- Figur 6 eine zweite Schnittansicht des Befestigungselements entlang der Ebene VI-VI von Figur 2,
- Figur 7 eine erste Seitenansicht des Verriegelungselements,
- Figur 8 eine zweite Seitenansicht des Verriegelungselements,
- Figur 9 eine Schnittansicht durch die Befestigungsbaugruppe aus Figur 1 in einem Zwischenmontagezustand, und
- Figur 10 eine Schnittansicht durch die Befestigungsbaugruppe aus Figur 1 in einem Endmontagezustand.

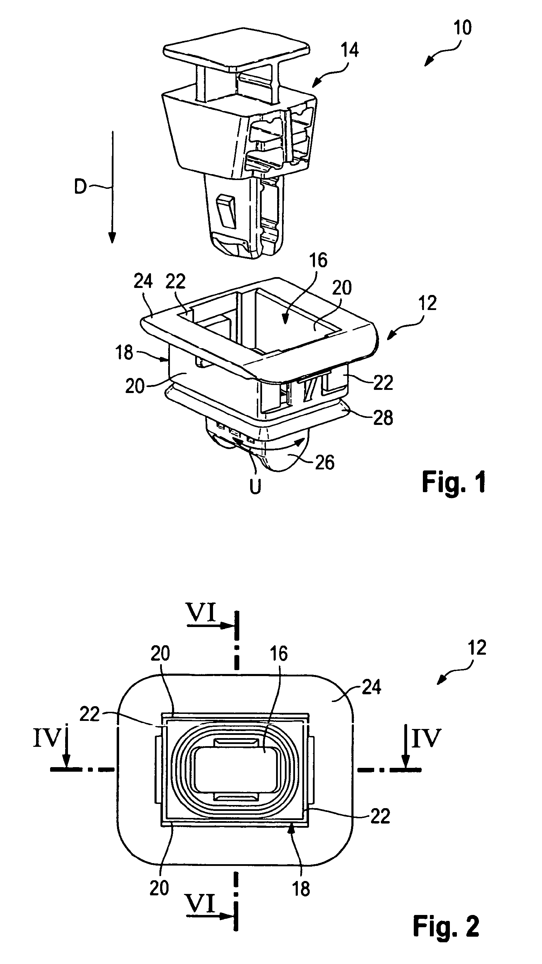

Die in Figur 1 dargestellte Befestigungsbaugruppe 10 enthält als wesentliche Bauteile ein Befestigungselement 12 sowie ein Verriegelungselement 14. Das Befestigungselement 12 hat einen Körper 18 mit einer Aussparung 16, die sich in einer Einschubrichtung D durch das gesamte Befestigungselement 12 erstreckt. Das Verriegelungselement 14 hat eine stiftähnliche Form und kann in Einschubrichtung D in die Aussparung 16 des Befestigungselements 12 eingeschoben werden.

Der Körper 18 des Befestigungselements 12 weist hier einen im Wesentlichen rechteckigen Querschnitt (siehe auch Figur 2) mit jeweils paarweise gegenüberliegenden Längsseiten 20 und Querseiten 22 auf. Am Körper 18 ist ein Flansch 24 vorgesehen sowie ein Vorsprung 26, mit dem das Befestigungselement 12 an einem Karosseriebauteil befestigt werden kann. Das Befestigungselement 12 weist des Weiteren eine Dichtung 28 auf, die in Umfangsrichtung U vollständig um den Körper 18 des Befestigungselements 12 umlaufend an diesem angeordnet ist.

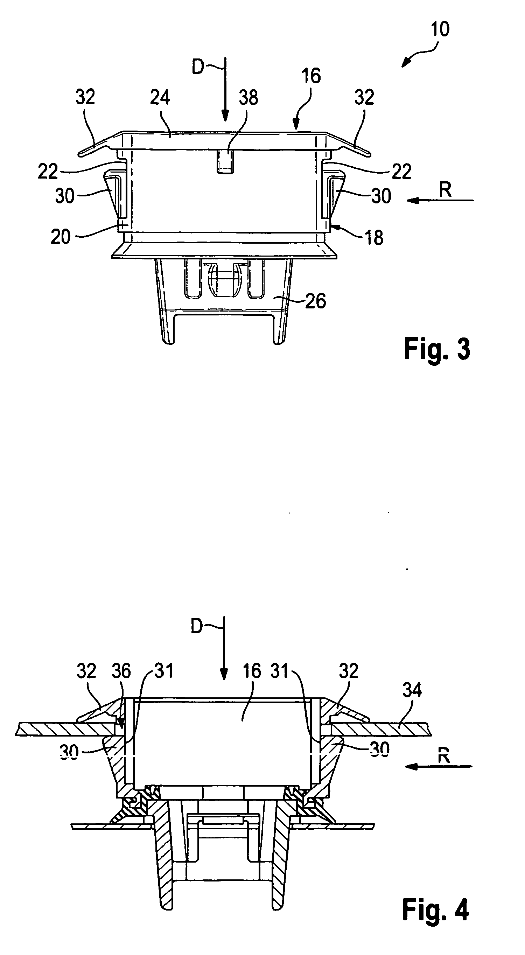

Wie in den Figuren 3 und 4 zu sehen ist, sind an den Querseiten 22 des Körpers 18 erste Rastelemente 30 zur Befestigung des Befestigungselements 12 an einem Anbauteil 34, beispielsweise ein Verkleidungsteil im Inneren einer Fahrzeugkarosserie, vorgesehen. Die ersten Rastelemente 30 sind in radialer Richtung R federnd am Körper 18 des Befestigungselements 12 gelagert und weisen eine zur Aussparung 16 weisende Anlagefläche 31 auf. Am Flansch 24 sind zudem zwei in Einschubrichtung D geneigte Flächen 32 vorgesehen.

In einem ersten Montageschritt wird das Befestigungselement 12 in Einschubrichtung D in eine Öffnung 36 des Anbauteils 34 eingeschoben, bis das Anbauteil 34 an den geneigten Flächen 32 anliegt und die ersten Rastelemente 30 auf der Rückseite des Anbauteils 34 verrasten. Die geneigten Flächen 32 sind in Einschubrichtung D federnd ausgebildet, so dass diese bei der Montage des Befestigungselements 12 nachgeben können bzw. eine in Richtung zu den ersten Rastelementen 30 gerichtete Federkraft bereitstellen können. Das Anbauteil 34 ist so in der Vormontageposition spielfrei zwischen den ersten Rastelementen 30 und den geneigten Flächen 32 am Befestigungselement 12 gehalten.

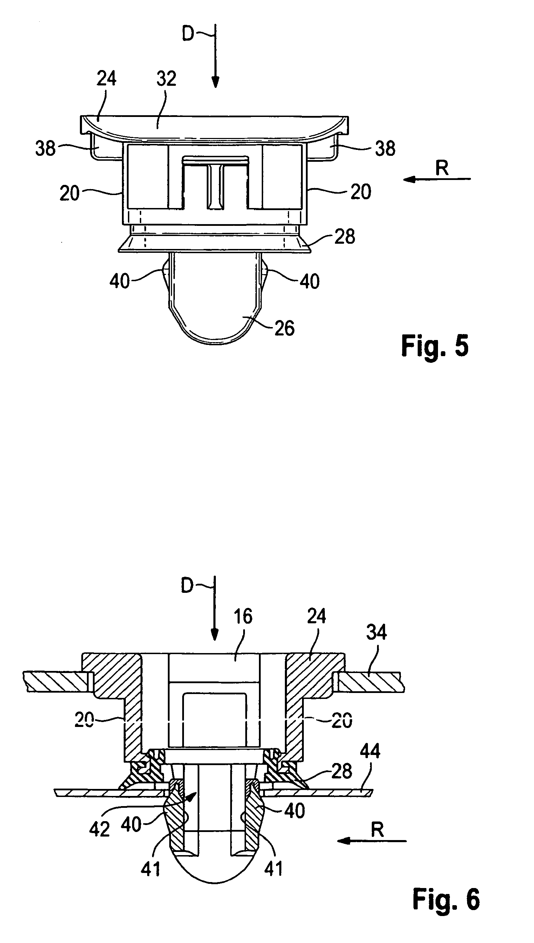

Wie in den Figuren 5 und 6 zu sehen ist, sind an den Längsseiten 20 des Befestigungselements 12 Zentrierelemente 38 vorgesehen, die hier durch in Einschubrichtung D verlaufende Vorsprünge gebildet sind, die in entsprechend ausgebildete Aussparungen am Anbauteil 34 eingreifen können. Durch diese Zentrierelemente 38 ist eine falsche Montage, beispielsweise eine um 90° verdrehte Montage, ausgeschlossen, da durch die Zentrierelemente 38 in diesem Fall ein vollständiges Einschieben des Befestigungselements 12 in das Anbauteil 34 bis zum Verrasten der ersten Rastelemente 30 verhindert wird.

An den Längsseiten 20 des Befestigungselements 12 sind des Weiteren zwei gegenüberliegende zweite Rastelemente 40 vorgesehen, die hier am Vorsprung 26 des Befestigungselements 12 ausgebildet sind. Die zweiten Rastelemente 40 sind analog zu den ersten Rastelementen 30 in radialer Richtung R federnd gelagert und weisen eine zur Aussparung 16 gerichtete zweite Anlagefläche 41 auf. Wie insbesondere in Figur 6 zu sehen ist, kann das Befestigungselement 12 mit dem Vorsprung 26 in Einschubrichtung D in eine Öffnung 42 eines Karosseriebauteils 44 eingeschoben werden, bis die zweiten Rastelemente 40 auf der Rückseite des Karosseriebauteils 44 einrasten. Der Vorsprung 26 hat hier eine in Einschubrichtung D konisch zulaufende Form, durch die die Montage des Befestigungselements 12 am Karosseriebauteil 44 erleichtert wird. Die Dichtung 28 liegt in diesem Fall am Karosseriebauteil 44 an und dichtet so die Öffnung 42 im Karosseriebauteil 44 ab.

Nach der Montage des Befestigungselements 12 am Karosseriebauteil 44 wird das Verriegelungselement 14 bis in eine Verriegelungsposition in die Aussparung 16 des Befestigungselements 12 eingeschoben. In dieser Position blockiert das Verriegelungselement, wie im Folgenden dargestellt wird, sowohl die ersten als auch die zweiten Rastelemente 30, 40, wodurch das Befestigungselement 12 am Anbauteil und am Karosseriebauteil fixiert ist.

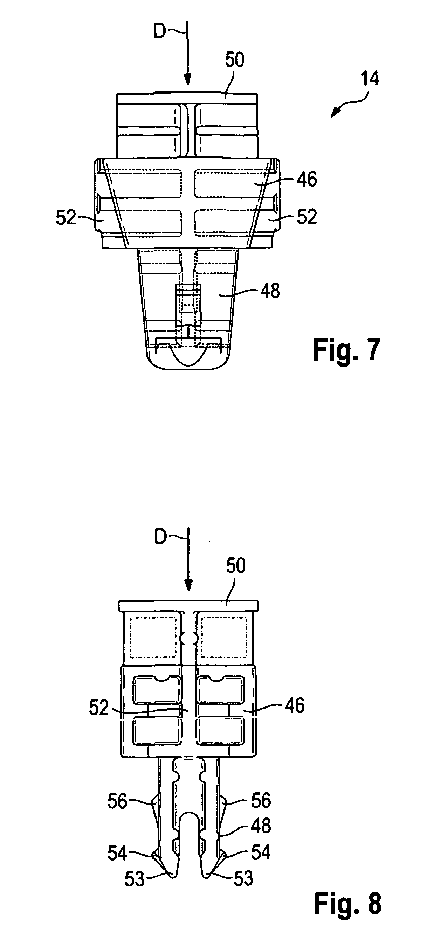

Das in den Figuren 7 und 8 dargestellte Verriegelungselement 14 hat einen im Wesentlichen rechteckigen Grundkörper 46 mit einem in Einschubrichtung D vorstehenden, gabelförmig ausgebildeten Ende 48 sowie einem Griffstück 50, das entgegen der Einschubrichtung D vom Grundkörper 46 vorsteht. Wie insbesondere in Figur 7 zu sehen ist, ist der Grundkörper 46 in Einschubrichtung D konisch zulaufend ausgebildet und weist zwei an gegenüberliegenden Seiten angeordnete, senkrecht verlaufende Leisten 52 auf.

Das gabelförmige Ende 48 weist an jeder der beiden Gabelenden 53 erste Rastnasen 54 und zweite Rastnasen 56 auf, die jeweils paarweise gegenüberliegend an den Gabelenden 53 angeordnet sind und in Einschubrichtung D hintereinander liegen.

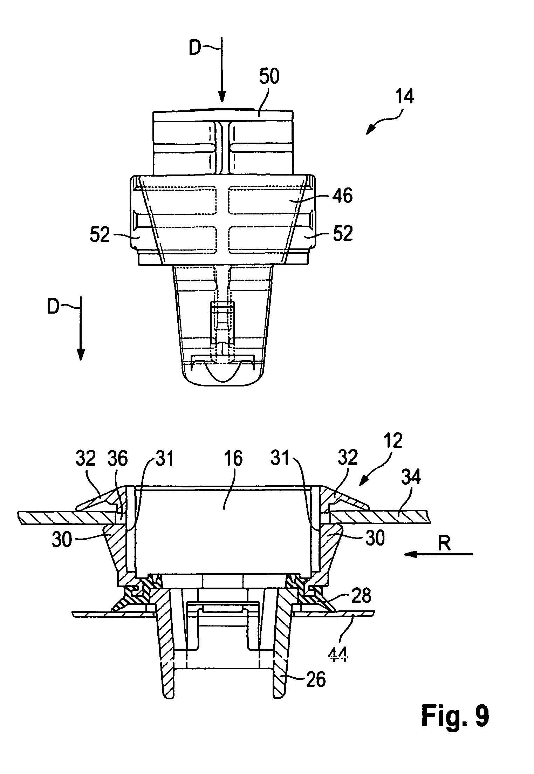

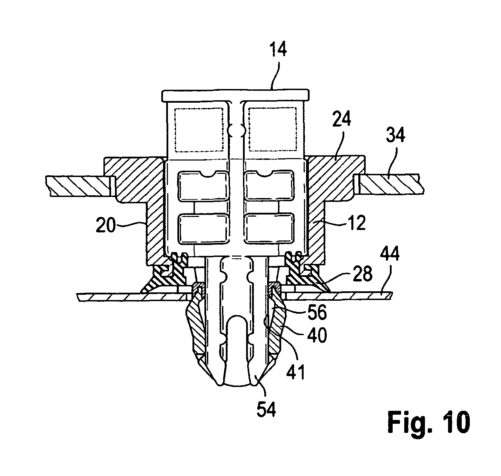

Nach der Montage des Befestigungselements 12 am Karosseriebauteil 44 wird das Verriegelungselement in Einschubrichtung D in die Aussparung 16 des Befestigungselements 12 eingeschoben (Figur 9). Die ersten Rastnasen 54 des Verriegelungselements können dabei in einer Zwischenposition verrasten, so dass das Verriegelungselement 14 in einer Vormontageposition am Befestigungselement 12 gehalten ist. Anschließend wird das Verriegelungselement 14 so weit in das Befestigungselement 12 eingeschoben, bis die ersten Rastnasen 54 auf der Rückseite des Befestigungselements 12 einrasten, wodurch das Verriegelungselement 14 in der Verriegelungsposition am Befestigungselement 12 fixiert ist (Figur 10).

In dieser Position des Verriegelungselements 14 liegen die Leisten 52 auf den Anlageflächen 31der ersten Rastelemente 30 an und die Gabelenden 53 an den Anlageflächen 41 der zweiten Rastelemente 40. Die ersten Rastelemente 30 und die zweiten Rastelemente 40 sind dadurch in radialer Richtung R fixiert, so dass diese nicht zum Lösen des Befestigungselements 12 vom Anbauteil 34 bzw. vom Karosseriebauteil 44 in radialer Richtung R nach innen gedrückt werden können.

Somit ist durch ein gemeinsames Verriegelungselement 14 zum einen das Befestigungselement 12 am Karosseriebauteil 44 und zum anderen das Befestigungselement 12 durch das Verriegelungselement 14 am Anbauteil 34 fixiert.

Wie insbesondere in Figur 10 zu sehen ist, ist das Anbauteil 34 beabstandet zum Karosseriebauteil 44 angeordnet und in dieser Lage durch die ersten Rastelemente 30 fixiert. Durch eine entsprechende konstruktive Gestaltung des Befestigungselements 12 bzw. eine entsprechende Positionierung der ersten Rastelemente 30 am Befestigungselement 12 kann die Position bzw. die Lage des Anbauteils 34 zum Karosseriebauteil 44 beliebig angepasst werden.

Abweichend von der hier dargestellten Ausführungsform könnten die ersten Rastelemente 30 und die zweiten Rastelemente 40 aber auch in Umfangsrichtung an der gleichen Außenfläche des Befestigungselements 12 vorgesehen sein. Insbesondere ist es nicht erforderlich, dass das Befestigungselement 12 einen rechteckigen Querschnitt aufweist. Falls ein Drehen des Anbauteils 34 nicht augeschlossen werden soll, sind auch andere Formen des Befestigungselements denkbar.

## Patentansprüche

1. Befestigungsgruppe (10) zur Befestigung eines Anbauteils (34), insbesondere eines Verkleidungsteils in einem Fahrzeuginnenraum, an einem Karosseriebauteil (44),
mit einem Befestigungselement (12), das in einer Vormontageposition am Anbauteil (34) befestigt werden kann und in einer Endmontageposition am Karosseriebauteil (44) befestigt ist, und
mit einem Verriegelungselement (14), das mit dem Befestigungselement (12) zusammenwirken kann und in einer Verriegelungsposition das Befestigungselement (12) in der Endmontageposition fixieren kann,
**dadurch gekennzeichnet, dass**
das Befestigungselement (12) erste Rastelemente (30) und zweite Rastelemente (40) aufweist, wobei die ersten Rastelemente (30) am Anbauteil (34) und die zweiten Rastelemente (40) am Karosseriebauteil (44) verrasten können.

2. Befestigungsbaugruppe nach Anspruch 1, **dadurch gekennzeichnet, dass** die ersten und die zweiten Rastelemente (30, 40) des Befestigungselements (12) an in Umfangsrichtung zueinander versetzt angeordneten Flächen des Befestigungselements (12) vorgesehen sind.

3. Befestigungsbaugruppe nach Anspruch 1 oder 2, **dadurch gekennzeichnet, dass** jeweils zwei in Einschubrichtung (D) paarweise gegenüberliegende erste und zweite Rastelemente (30, 40) vorgesehen sind.

4. Befestigungsbaugruppe nach einem der vorhergehenden Ansprüche, **dadurch gekennzeichnet, dass** das Befestigungselement (12) einen Körper (18) aufweist, der das Befestigungselement (12) in Umfangrichtung vollständig schließt.

5. Befestigungsbaugruppe nach Anspruch 4, **dadurch gekennzeichnet, dass** der Körper (18) einen im Wesentlichen rechteckigen Querschnitt mit jeweils gegenüberliegen Flächen an den Längsseiten (20) und den Querseiten (22) aufweist.

6. Befestigungsbaugruppe nach Anspruch 5, **dadurch gekennzeichnet, dass** die ersten Rastelemente (30) an den Flächen der Längsseiten (20) oder der Querseiten (22) angeordnet sind und die zweiten Rastelemente (40) an den Flächen der Querseiten (22) oder der Längsseiten angeordnet sind.

7. Befestigungsbaugruppe nach einem der vorhergehenden Ansprüche, **dadurch gekennzeichnet, dass** das Befestigungselement (12) Zentrierelemente (52) aufweist, die ein genaues Positionieren des Befestigungselements (12) am Anbauteil (34) ermöglichen.

8. Befestigungsbaugruppe nach Anspruch 7, **dadurch gekennzeichnet, dass** die Zentrierelemente (52) Vorsprünge, insbesondere in Einschubrichtung (D) verlaufende Leisten aufweisen.

9. Befestigungsbaugruppe nach einem der vorhergehenden Ansprüche, **dadurch gekennzeichnet, dass** am Befestigungselement (12) eine Dichtung (28) vorgesehen ist, die in montiertem Zustand eine Öffnung (42) in dem Karosseriebauteil (44) abdichten kann.

## Claims

1. A fastening assembly (10) for fastening an add-on part (34), in particular a lining part in a vehicle interior, to a vehicle body component (44), having
a fastening element (12) which in a pre-mounting position can be fixed to the add-on part (34) and which in the final mounting position is fixed to the vehicle body component (44), and
a locking element (14) which can cooperate with the fastening element (12) and which in a locking position can fix the fastening element (12) in the final mounting position,
**characterized in that**
the fastening element (12) has first latching elements (30) and second latching elements (40), the first latching elements (30) being adapted to latch on the add-on part (34), and the second latching elements (40) being adapted to latch on the vehicle body component (44).

2. The fastening assembly according to claim 1, **characterized in that** the first and the second latching elements (30, 40) of the fastening element (12) are provided on surfaces of the fastening element (12) which are arranged offset from each other in the peripheral direction.

3. The fastening assembly according to claim 1 or 2, **characterized in that** two first and second latching elements (30, 40) are respectively provided which are arranged opposite each other in pairs in the direction of insertion (D).

4. The fastening assembly according to any of the preceding claims, **characterized in that** the fastening element (12) has a body (18) which completely closes the fastening element (12) in the peripheral direction.

5. The fastening assembly according to claim 4, **characterized in that** the body (18) has a substantially rectangular cross-section having respective opposite surfaces on the long sides (20) and on the short sides (22).

6. The fastening assembly according to claim 5, **characterized in that** the first latching elements (30) are arranged on the surfaces of the long sides (20) or of the short sides (22), and **in that** the second latching elements (40) are arranged on the surfaces of the short sides (22) or of the long sides.

7. The fastening assembly according to any of the preceding claims, **characterized in that** the fastening element (12) has centering elements (52) which permit an accurate positioning of the fastening element (12) on the add-on part (34).

8. The fastening assembly according to claim 7, **characterized in that** the centering elements (52) include projections, in particular ledges extending in the direction of insertion (D).

9. The fastening assembly according to any of the preceding claims, **characterized in that** the fastening element (12) is provided with a seal (28) which in the mounted state can seal an opening (42) in the vehicle body component (44).

## Revendications

1. Ensemble de fixation (10) pour la fixation d'une pièce rapportée (34), en particulier d'une pièce de revêtement dans un habitacle de véhicule, à un composant de carrosserie (44), comportant
un élément de fixation (12) qui peut être fixé à la pièce rapportée (34) dans une position de prémontage, et qui est fixé au composant de carrosserie (44) dans une position de montage finale, et
un élément de verrouillage (14) qui peut coopérer avec l'élément de fixation (12) et qui dans une position de verrouillage est apte à fixer l'élément de fixation (12) dans la position de montage finale,
**caractérisé en ce que**
l'élément de fixation (12) présente des premiers éléments d'enclenchement (30) et des deuxièmes éléments d'enclenchement (40), les premiers éléments d'enclenchement (30) pouvant s'enclencher sur la pièce rapportée (34), et les deuxièmes éléments d'enclenchement (40) pouvant s'enclencher sur le composant de carrosserie (44).

2. Ensemble de fixation selon la revendication 1, **caractérisé en ce que** les premiers et les deuxièmes éléments d'enclenchement (30, 40) de l'élément de fixation (12) sur prévus sur des faces de l'élément de fixation (12) qui sont agencées de manière à être décalées les unes par rapport aux autres dans le sens périphérique.

3. Ensemble de fixation selon la revendication 1 ou 2, **caractérisé en ce qu'**il est prévu deux premiers et deuxièmes éléments d'enclenchement (30, 40) respectifs qui sont opposés par paires dans le sens d'insertion (D).

4. Ensemble de fixation selon l'une des revendications précédentes, **caractérisé en ce que** l'élément de fixation (12) présente un corps (18) qui ferme entièrement l'élément de fixation (12) dans le sens périphérique.

5. Ensemble de fixation selon la revendication 4, **caractérisé en ce que** le corps (18) présente une section transversale sensiblement rectangulaire avec des faces respectivement opposées sur les grands côtés (20) et les côtés transversaux (22).

6. Ensemble de fixation selon la revendication 5, **caractérisé en ce que** les premiers éléments d'enclenchement (30) sont agencés sur les faces des grands côtés (20) ou des côtés transversaux (22), et les deuxièmes éléments d'enclenchement (40) sont agencés sur les faces des côtés transversaux (22) ou des grands côtés.

7. Ensemble de fixation selon l'une des revendications précédentes, **caractérisé en ce que** l'élément de fixation (12) présente des éléments de centrage (52) qui permettent un positionnement précis de l'élément de fixation (12) sur la pièce rapportée (34).

8. Ensemble de fixation selon la revendication 7, **caractérisé en ce que** les éléments de centrage (52) présentent des saillies, en particulier des barrettes s'étendant dans le sens d'insertion (D).

9. Ensemble de fixation selon l'une des revendications précédentes, **caractérisé en ce qu'**il est prévu un joint d'étanchéité (28) sur l'élément de fixation (12), qui à l'état monté est apte à étancher un orifice (42) dans le composant de carrosserie (44).
